# EUROPEAN PATENT SPECIFICATION

(11) **EP 2 565 393 B1**
(45) Date of publication and mention of the grant of the patent: **05.03.2014**
(21) Application number: 11306084.2
(22) Date of filing: 30.08.2011
(51) Int. Cl.: F01D 25/16, F02C 6/12

(54) **Turbocharger bearing comprising an insulating sleeve between the inner bearing ring and the shaft**
Turbolader mit Isolierhuelse zwischen inneren Lagerring und Welle
Turbocompresseur avec manchon isolant entre la bague intérieure du palier et l'arbre

(43) Date of publication of application: 06.03.2013
(73) Proprietor: Aktiebolaget SKF, 415 50 Göteborg (SE)
(72) Inventor: Viault, Samuel, 37360 Saint-Antoine-du-Rocher (FR); Berruet, Nicolas, 37360 Neuille-Pont-Pierre (FR); Corbett, Richard, 37230 Fondettes (FR); Liverato, Yves-André, 37370 Saint Paterne Racan (FR); Chambonneau, Charles, 37300 Joue-les-Tours (FR); Ghilbert-Simon, Aurélien, 37390 Saint Roch (FR); Ribault, Patrice, 37210 Vouvray (FR)
(74) Representative: Casalonga, Axel

(56) References cited:
- EP-A1- 1 273 857
- EP-A1- 2 011 967
- DE-A1-102007 036 916

## Description

The present invention relates to the field of turbochargers, and in particular those used in combustion engines for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

The engine oil may be used for the lubrication of the rolling bearing. However, when the combustion engine stops, the delivery of the engine oil is shut off. This causes a strong temperature increase of the residual oil located between the shaft and the rolling bearing near the turbine wheel. The temperature can reach 1000°C; the cooling of said rolling bearing is thus not satisfactory. Furthermore, the engine oil may contain foreign matter, for example, small metal particles, thereby causing a premature wear of the rolling bearing.

One aim of the present invention is therefore to overcome the aforementioned drawbacks.

It is a particular object of the present invention to provide a turbocharger which is simple to manufacture and economic capable of operating at high rotation speed, such as 250000 rpm and at high temperature, for example 900°C-1000°C.

Another object of the invention is to guarantee good thermally insulation properties between the shaft and the rolling bearing.

In one embodiment, the turbocharger comprises a shaft, a housing, a turbine wheel and a compressor wheel mounted onto the shaft, at least one rolling bearing located between the shaft and the housing and comprising an inner ring, an outer ring and at least one row of rolling elements between raceways provided on the rings.

The turbocharger comprises at least one insulation means radially located between the inner ring and the shaft, so as to thermally isolate the inner ring from the shaft.

EP 1 273 857 A1 discloses an expansion turbine, whereby an insulation sleeve is located between the inner ring of a roller bearing and the turbine shaft. In EP 2 011 967 A1 an insulation sleeve of a turbocharger is disclosed, which is located between the turbine wheel and the shaft in order to insulate the bearing housing from the hot gases of the turbine wheel.

The insulation means between the rolling bearing and the shaft provide a good thermal insulation between said elements even when the combustion engine stops. This increases the service-life of the rolling bearing.

Advantageously, the insulation means is made of a material having a thermal conductivity less than the thermal conductivity of the shaft, for example, less than 46W.m⁻¹.K⁻¹.

The insulation means may comprise at least one intermediate sleeve having an outer cylindrical surface in contact with the inner ring of the rolling bearing and an inner bore in contact with the outer cylindrical surface of the shaft.

The intermediate sleeve can be a sheet having a thickness comprised between 0.2 mm and 3 mm, or a tube having a thickness higher than 0.3 mm.

In an embodiment, the intermediate sleeve comprises at least one end axially extending further than a radial lateral surface of the inner ring of the rolling bearing. The end extending further than the inner ring is further referenced as "first end".

One end of the sleeve, opposite to the first end, may comprise a shoulder located axially between the turbine wheel and the inner ring of the rolling bearing.

In another embodiment, the turbocharger comprises two intermediate sleeves identical and symmetrical with respect to the transverse radial plane of symmetry of the rolling bearing and axially located respectively at one end of the inner ring, so as to provide a gap located axially between the sleeves and radially between the shaft and the inner ring of the rolling bearing.

Said gap is for example filled with air, forming another insulation means between the shaft and the inner ring of the rolling bearing.

One end of each intermediate sleeves may be provided with a shoulder axially in contact with the inner ring of the rolling bearing.

For example, the intermediate sleeves are made of a metallic material having a thermal conductivity less than 19 W.m⁻¹.K⁻¹, such as for example stainless steel.

In another embodiment, the outer cylindrical surface of the intermediate sleeve is provided with at least one axial groove adapted to cooperate with at least two passages made through the thickness of the inner ring of the rolling bearing.

The outer cylindrical surface of the intermediate sleeve may be further provided with at least two drilled projections extending radially towards the inner ring and adapted to cooperate with said passages of the inner ring.

The present invention and its advantages will be better understood by studying the detailed description of specific embodiments given by way of non-limiting examples and illustrated by the appended drawings on which:
- Figure 1a is an axial section of a turbocharger according to a first example of the invention;
- Figure 1b is a perspective view of an insulation means of Figure 1a;
- Figure 2a is an axial section of a turbocharger according to a second example of the invention;
- Figure 2b is a perspective view of an insulation means of Figure 2a;
- Figure 3a is an axial section of a turbocharger according to a third example of the invention;
- Figure 3b is a perspective view of an insulation means of Figure 3a;
- Figure 4 is an axial section of a turbocharger according to a fourth example of the invention;
- Figure 5a is an axial section of a turbocharger according to a fifth example of the invention;
- Figure 5b is a perspective view of an inner ring of Figure 5a;
- Figure 5c is a perspective view of an insulation means of Figure 5a;
- Figure 6a is an axial section of a turbocharger according to a seventh example of the invention;
- Figure 6b is a perspective view of an insulation means of Figure 6a.

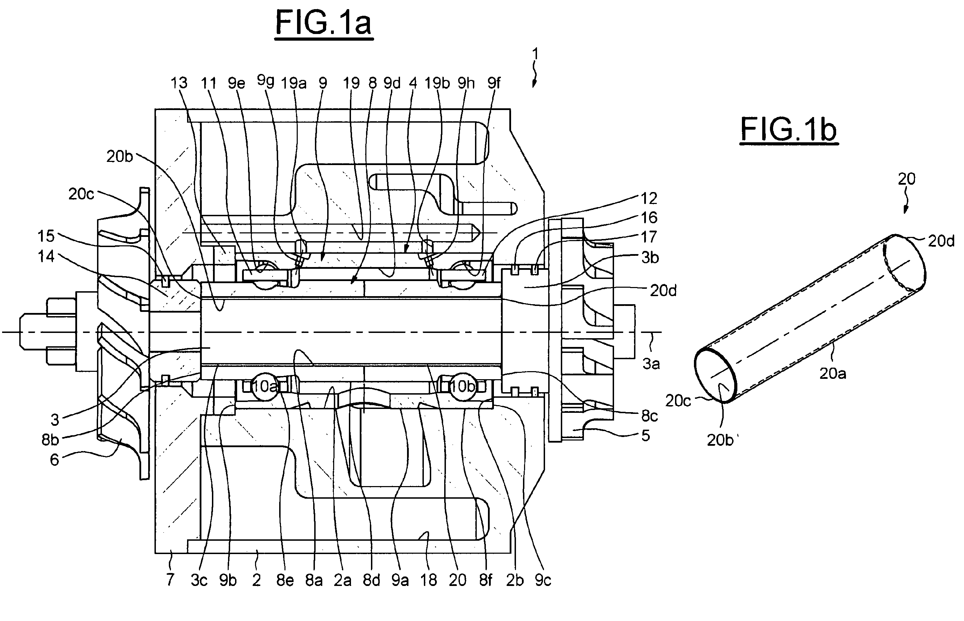

As illustrated on Figure 1, which illustrates an embodiment of a turbocharger 1 according to an example of the invention, the turbocharger 1 comprises a housing 2, a shaft 3 extending along an axial axis 3a through a cylindrical bore 2a or opening of the housing 2, a rolling bearing 4 disposed into the bore 2a of the housing 2, a turbine wheel 5 fixed at one end of the shaft 3, a compressor wheel 6 fixed at an opposite end of said shaft 3, and an insulation means 20 radially located between the shaft 3 and the rolling bearing 4. The turbocharger 1 also comprises a cap 7 fixed at an axial end of the housing 2.

The rolling bearing 4 comprises an inner ring 8 and an outer ring 9 between which are housed two rows of rolling elements 10a and 10b, which in this case are balls, two annular cages 11, 12 maintaining the circumferential spacing of the rolling elements 10a, 10b. The axis of the rolling bearing 4 is coaxial with the axis 3a of the shaft 3 of the turbocharger 1.

The inner and outer rings 8, 9 are concentric and symmetric with respect to a transverse radial plane passing through the centre of the rolling bearing 4. The rings 8, 9 are of the solid type. A "solid ring" is to be understood as a ring obtained by machining with removal of material (by machining, grinding) from metal tube stock, bar stock, rough forgings and/or rolled blanks.

The outer ring 9 comprises an outer cylindrical surface 9a mounted radially into the opening 2a of the housing 2 and delimited by opposite radial lateral surfaces 9b, 9c which respectively axially come into contact with the cap 7 and a radial shoulder 2b of the housing 2. The outer ring 9 also comprises a bore 9d of cylindrical shape from which are formed toroidal raceways 9e, 9f having in cross-section a concave internal profile adapted to the rolling elements 10a, 10b. The raceways 9e, 9f are symmetrical with respect to the transverse radial plane passing through the centre of the rolling bearing 4. As illustrated, a bushing 13 is mounted axially between the cap 7 and the radial lateral surface 9b of the outer ring 9, in order to compensate an axial clearance between the cap 7 and said radial lateral surface 9b.

In the disclosed embodiment, the inner ring 8 is made of two parts which are identical, symmetrical with respect to the transverse radial plane of symmetry of the rolling bearing 4 and mounted axially fixedly one against the other. The inner ring 8 is here composed of two identical half rings. Alternatively, the inner ring 8 may be made in one part. The inner ring 8 has a bore 8a of cylindrical shape into which the insulation means 20 is mounted. Said bore 8a is delimited respectively by opposite radial lateral surfaces 8b, 8c which respectively axially bears against the compressor wheel 6 via a spacer 14 radially located between the shaft 3 and the cap 7 and against a radial shoulder 3b of the shaft 3. The inner ring 8 also comprises an outer cylindrical surface 8d onto which first and second toroidal circular raceways 8e, 8f are formed. The said raceways 8e, 8f have in cross-section a concave internal profile adapted to the rolling elements 10a, 10b the said raceways 8e, 8f being directed radially outwards. The raceways 8e, 8f are symmetrical with respect to the transverse radial plane passing through the centre of the rolling bearing 4.

As shown on Figure 1, the turbocharger 1 is further provided with a sealing ring 15 mounted radially between the spacer 14 and the cap 7 and axially disposed between the compressor wheel 6 and the rolling bearing 4, and with two sealing rings 16, 17 disposed radially between the shoulder 3b of said shaft 3 and the bore 2a of housing 2 and axially mounted between the rolling bearing 4 and the turbine wheel 5.

In the disclosed embodiment, the housing 2 comprises an axial cooling channel 18 extending from a radial end surface of said housing 2 against which the cap 7 is mounted. The cooling channel 18 extends axially further than the outer ring 9 of the rolling bearing 4 and ends in the vicinity of a radial end surface of the housing 2 located on the turbine wheel 5 side. The cooling channel 18 is closed by the cap 7. The cooling channel 18 formed within the housing 2 is annular and radially surrounds the rolling bearing 4 on its entire length. A cooling fluid (not shown), such as water, can be introduced into the cooling channel 18.

The housing 2 further comprises an axial drilling 19, acting as a lubricant reservoir, extending from a radial end surface of said housing 2 against which the cap 7 is mounted. The drilling 19 ends in the vicinity of a radial end surface of the housing 2 located on the turbine wheel 5 side. The drilling 19 formed within the housing 2 is annular and radially surrounds the rolling bearing 4 and is provided with passages 19a, 19b made through the thickness of the housing 2. The passages 19a, 19b are adapted to cooperate respectively with a passage 9g, 9h made through the thickness of the outer ring 9 though which the lubricant contained in the drilling 19 can flow by gravity towards the balls 10a and 10b.

As illustrated on Figures 1a and 1b, the insulation means 20 is radially located between the shaft 3 and the inner ring 8 of the rolling bearing 4. The insulation means 20 is an intermediate sleeve having a thickness comprised between 0.2 mm and 3 mm, so as to form an insulation sheet, such as a metal sheet of small thickness. The intermediate sleeve 20 comprises an outer cylindrical surface 20a in contact with the inner bore 8a of the inner ring 8 and an inner bore 20b mounted onto the outer cylindrical surface 3c of the shaft 3. The intermediate sleeve is delimited by two opposite radial lateral surfaces 20c, 20d, which are respectively coplanar with the radial lateral surfaces 8b, 8c the inner ring 8. The intermediate sleeve 20 is made of a material having a thermal conductivity less than 46 W.m⁻¹.K⁻¹, such as 100C6 or DC03 Aluminium alloy.

As an alternative, the insulation means 20 can be made of a layer onto the outer cylindrical surface 3c of the shaft 3, for example a ceramic layer.

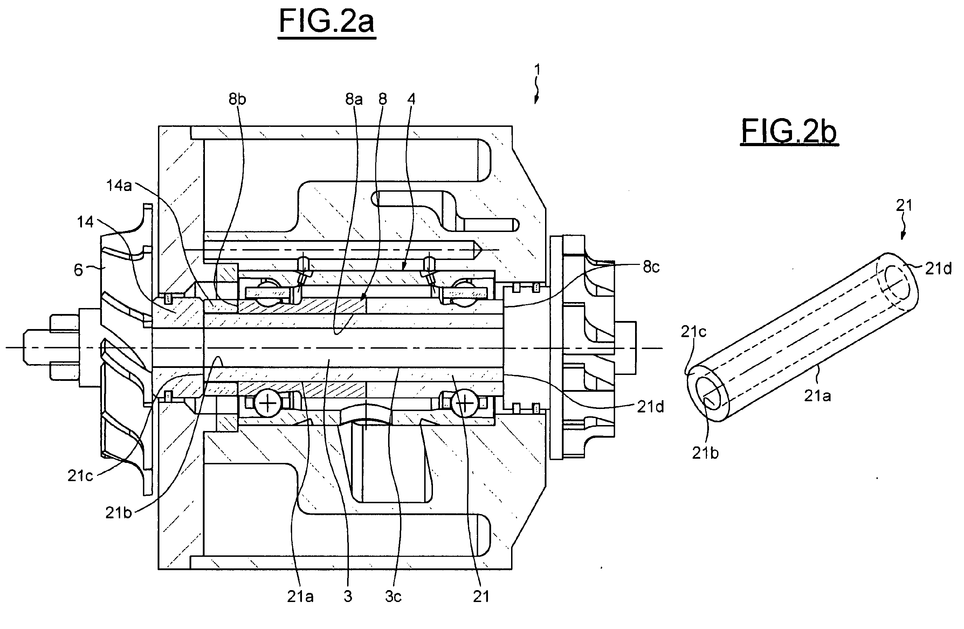

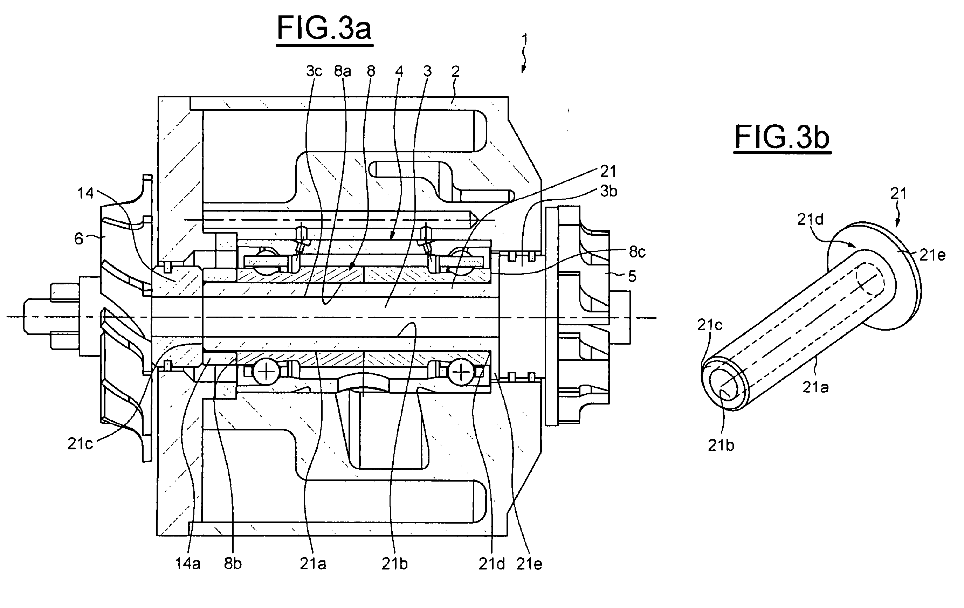

Figures 2a, 2b, 3a, 3b, in which identical parts are given identical references, illustrates other examples of an insulation means 21.

As illustrated on Figures 2a and 3a, the insulation means 21 is radially located between the shaft 3 and the inner ring 8 of the rolling bearing 4. The insulation means 21 is an intermediate sleeve, of tubular shape, having a thickness higher than 0.3 mm.

As illustrated in details on Figure 2b, the intermediate sleeve 21 comprises an outer cylindrical surface 21a in contact with the inner bore 8a of the inner ring 8 and an inner bore 21b mounted onto the outer cylindrical surface 3c of the shaft 3. The intermediate sleeve 21 is delimited by two opposite radial lateral surfaces 21c, 21d. One end 21c of the intermediate sleeve 21, referenced as "first end", axially extends further than the radial lateral surface 8b of the inner ring 8 and the other end 21d, opposite to the first end 21c, is coplanar with the radial lateral surface 8c the inner ring 8. The inner ring 8 bears axially against the spacer 14 via a bushing 14a radially mounted on the outer surface 21a of the intermediate sleeve 21 and axially between the spacer 14 and the radial lateral surface 9b of the outer ring 9, in order to compensate an axial clearance between the turbine wheel 6 and said radial lateral surface 9b. The intermediate sleeve 21 is made of a material having a thermal conductivity less than 46 W.m⁻¹.K⁻¹, such as 100C6 or DC03 or Aluminium alloy.

As illustrated on Figures 3a and 3b, the intermediate sleeve 21 comprises an outer cylindrical surface 21a in contact with the inner bore 8a of the inner ring 8 and an inner bore 21b mounted onto the outer cylindrical surface 3c of the shaft 3. The intermediate sleeve 21 is delimited by two opposite radial lateral surfaces 21c, 21d. One end 21c of the intermediate sleeve, referenced as "first end", axially extends further than the radial lateral surface 8b of the inner ring 8 and the other end 21d, opposite to the first end 21c, is provided with a shoulder 21e axially located between the radial lateral surface 8c of the inner ring 8 and the shoulder 3b of the shaft 3, in order to axially retain the inner ring 8 of the rolling bearing 4. The inner ring 8 bears axially against the spacer 14 via a bushing 14a radially mounted on the outer surface 21a of the intermediate sleeve 21 and axially between the spacer 14 and the radial lateral surface 9b of the outer ring 9, in order to compensate the axial clearance between the turbine wheel 6 and said radial lateral surface 9b.

The first end 21c of the intermediate sleeve 21, illustrated on Figures 2a and 3a, extending axially further than the inner ring 8 can be provided with a positioning means (not illustrated) provided on the outer cylindrical surface 21a of the sleeve 21a and adapted to cooperate with an external tool (not illustrated) used, for example in order to dissemble the shaft 3 from the intermediate sleeve 21.

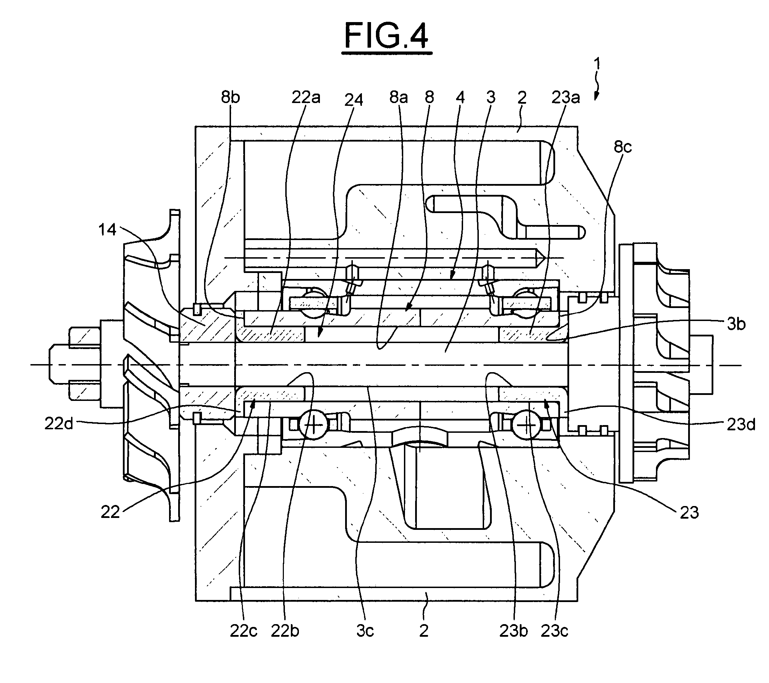

Figure 4, in which identical parts are given identical references, differs from the example of Figure 1, in that the insulation means comprises two intermediate sleeves 22 and 23.

The two intermediate sleeves 22 and 23 are identical and symmetrical with respect to the transverse radial plane of symmetry of the rolling bearing 4. The first intermediate sleeve 22 comprises a cylindrical portion 22a having a bore 22b mounted on the outer cylindrical surface 3c of the shaft 3 and an outer cylindrical surface 22c in contact with the bore 8a of the inner ring 8. The first sleeve 22 further comprises a radial portion 22d extending radially towards the housing 2 and forming a shoulder for the inner ring 8. The shoulder 22d is in axially located between the spacer 14 and the radial lateral surface 8b of the inner ring 8.

The second intermediate sleeve 23 comprises a cylindrical portion 23a having a bore 23b mounted on the outer cylindrical surface 3c of the shaft 3 and an outer cylindrical surface 23c in contact with the bore 8a of the inner ring 8. The second sleeve 23 further comprises a radial portion 23d extending radially towards the housing 2 and forming a shoulder for the inner ring 8. The shoulder 23d is in axially located between the shoulder 3b of the shaft 3 and the radial lateral surface 8c of the inner ring 8.

The axial length of the intermediate sleeves 22, 23 is smaller than the axial length of the inner ring 8, axially delimiting a gap 24 between said sleeves 22, 23. The gap 24 is radially delimited between the shaft 3 and the inner ring 8 of the rolling bearing 4. The gap 24 can be filled with an insulation material, for example air, in order to thermally insulate the shaft 3 and the rolling bearing 4.

Each intermediate sleeves 22, 23 comprises a thickness higher than 0.3 mm and is made of a material having a thermal conductivity less than 19 W.m⁻¹.K⁻¹, such as for example, stainless steel.

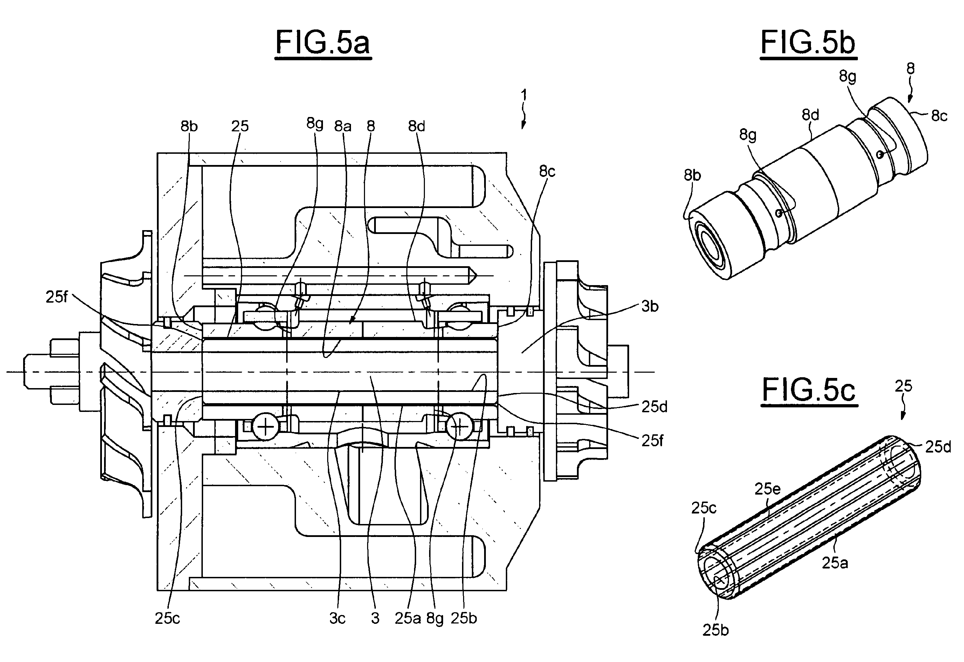

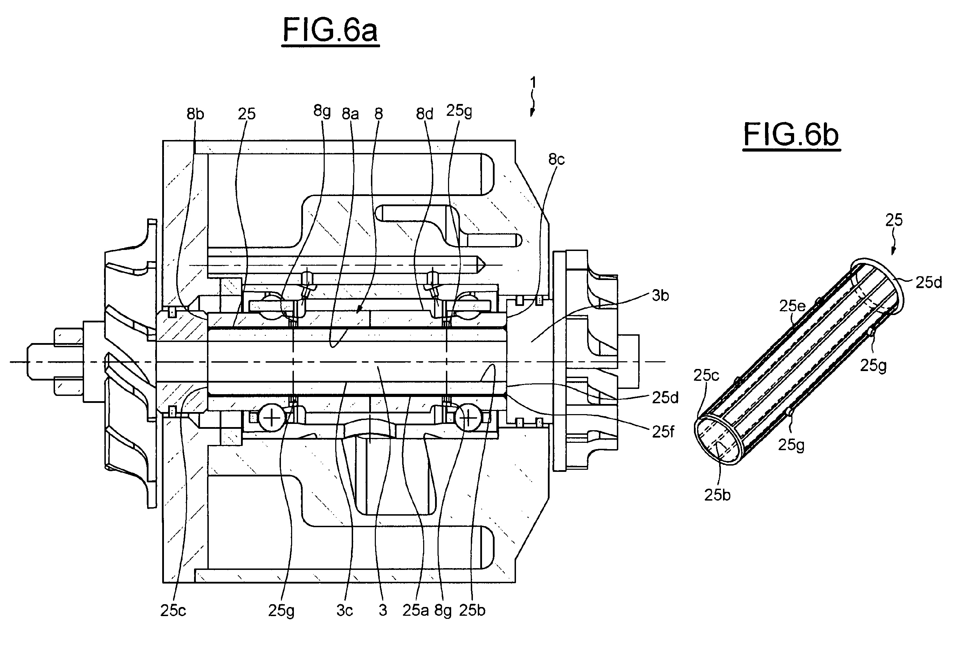

Figures 5a and 6a, in which identical parts are given identical references, differs from the example of Figure 1 by the insulation means.

The insulation means 25 of Figures 5a and 5c is radially located between the shaft 3 and the inner ring 8 of the rolling bearing 4. The insulation means 25 is an intermediate sleeve, of tubular shape, having a thickness comprised between 0.2 mm and 3 mm. The intermediate sleeve 25 comprises an outer cylindrical surface 25a in contact with the inner bore 8a of the inner ring 8 and an inner bore 25b mounted onto the outer cylindrical surface 3c of the shaft 3. The intermediate sleeve 25 is delimited by two opposite radial lateral surfaces 25c, 25d, which are respectively coplanar with the radial lateral surfaces 8b, 8c the inner ring 8. The intermediate sleeve 25 is made of a material having a thermal conductivity less than 46 W.m⁻¹.K⁻¹ such as 100C6, DC03 or Aluminium alloy.

The outer cylindrical surface 25a of the intermediate sleeve 25 is provided with axial grooves 25e adapted to cooperate with passages 8g made through the thickness of the inner ring 8 of the rolling bearing 4, as illustrated on Figure 5b. Thanks to the axial grooves, the engine oil, used as lubricant for the rolling bearing, circulates from the rolling elements 10a, 10b through the passages 8g towards the intermediate sleeve 25 and into the axial grooves 25e. Each radial lateral surface 25c, 25d of the intermediate sleeve 25 is provided with chamfer 25f, in order to collect the engine oil and to feed the axial grooves 25e with engine oil.

As illustrated on Figures 6a and 6b, the insulation means 25 is provided with axial grooves 25e adapted to cooperate with passages 8g made through the thickness of the inner ring 8 of the rolling bearing 4, and with drilled projections 25g extending radially towards the inner ring 8 and adapted to cooperate with said passages 8g of the inner ring 8.

It should be noted that the embodiments illustrated and described were given merely by way of non-limiting indicative examples and that modifications and variations are possible within the scope of the invention.

Thanks to the invention, the intermediate sleeve is used as a thermally insulation means for insulation the rolling bearing from the shaft. Furthermore, thanks to an end extending axially further than the inner ring, it is easy to disassemble the sleeve from the shaft without being damaging the rolling bearing during the disassembly procedure.

The invention applies not only to turbocharger comprising an angular contact ball rolling bearing with a double rows of balls but also to turbocharger comprising other types of rolling bearing, for example rolling bearing having four points contact and/or with a single row of balls or with at least three rows of balls.

Finally, it has to be made clear that by a turbocharger it is also meant a waste heat recovery turbine, a turbocompound or a compressor.

## Claims

1. Turbocharger comprising a shaft (3), a housing (2), a turbine wheel (6) and a compressor wheel (5) mounted onto the shaft (3), at least one rolling bearing (4) located between the shaft (3) and the housing (2) and comprising an inner ring (8), an outer ring (9) and at least one row of rolling elements (10a, 10b) between raceways (8e, 9e, 8f, 9f) provided on the rings (8, 9), and comprising at least one insulation means (25) radially located between the inner ring (8) and the shaft (3), so as to thermally isolate the inner ring (8) from the shaft (3), the insulation means (25) comprising at least one intermediate sleeve (25) having an outer cylindrical surface (25a) in contact with the inner ring (8) of the rolling bearing (4) and an inner bore (25b) in contact with the outer cylindrical surface (3c) of the shaft (3), **characterized in that** the outer cylindrical surface (25a) of the intermediate sleeve (25) is provided with at least one axial groove (25e) adapted to cooperate with at least two passages (8g) made through the thickness of the inner ring (8) of the rolling bearing (4).

2. Turbocharger according to claim 1, in which the insulation means (25) is made of a material having a thermal conductivity less than 46W.m⁻¹.K⁻¹.

3. Turbocharger according to claim 1 or 2, in which the intermediate sleeve (25) has a thickness higher than 0.3 mm.

4. Turbocharger according to any of the preceding claims, in which the outer cylindrical surface (25a) of the intermediate sleeve (25) is provided with at least two drilled projections (25g) extending radially towards the inner ring (8) and adapted to cooperate with said passages (8g) of the inner ring (8).

## Patentansprüche

1. Turbolader, welcher Folgendes aufweist: eine Welle (3), ein Gehäuse (2), ein Turbinenrad (6) und ein Verdichterrad (5), die auf der Welle (3) angebracht sind, mindestens ein Wälzlager (4), das zwischen der Welle (3) und dem Gehäuse (2) angeordnet ist und einen Innenring (8), einen Außenring (9) und mindestens eine Reihe von Wälzkörpern (10a, 10b) zwischen Laufbahnen (8e, 9e, 8f, 9f), die auf den Ringen (8, 9) vorgesehen sind, aufweist und mindestens ein Isolationsmittel (25) aufweist, das radial zwischen dem Innenring (8) und der Welle (3) angeordnet ist, um den Innenring (8) von der Welle (3) thermisch zu isolieren, wobei das Isolationsmittel (25) mindestens eine Zwischenhülse (25) mit einer äußeren zylindrischen Fläche (25a), die sich mit dem Innenring (8) des Wälzlagers (4) in Kontakt befindet, und einer Innenbohrung (25b), die sich mit der äußeren zylindrischen Fläche (3c) der Welle (3) in Kontakt befindet, aufweist, **dadurch gekennzeichnet, dass** die äußere zylindrische Fläche (25a) der Zwischenhülse (25) mit mindestens einer axialen Nut (25e) versehen ist, die dazu eingerichtet ist, mit mindestens zwei Durchlässen (8g) zusammenzuwirken, die durch die Dicke des Innenringes (8) des Wälzlagers (4) hindurch ausgebildet sind.

2. Turbolader nach Anspruch 1, wobei das Isolationsmittel (25) aus einem Material hergestellt ist, das eine Wärmeleitfähigkeit von weniger als 46 W.m⁻¹.K⁻¹ aufweist.

3. Turbolader nach Anspruch 1 oder 2, wobei die Zwischenhülse (25) eine Dicke von mehr als 0,3 mm aufweist.

4. Turbolader nach einem der vorhergehenden Ansprüche, wobei die äußere zylindrische Fläche (25a) der Zwischenhülse (25) mit mindestens zwei durchbohrten Vorsprüngen (25g) versehen ist, die sich radial in Richtung des Innenringes (8) erstrecken und dazu eingerichtet sind, mit den Durchlässen (8g) des Innenringes (8) zusammenzuwirken.

## Revendications

1. Turbocompresseur comprenant un arbre (3), un carter (2), une roue de turbine (6) et une roue de compresseur (5) montées sur l'arbre (3), au moins un palier à roulement (4) situé entre l'arbre (3) et le carter (2) et comprenant une bague interne (8), une bague externe (9) et au moins une rangée d'éléments de roulement (10a, 10b) entre des chemins de roulement (8e, 9e, 8f, 9f) prévus sur les bagues (8, 9) et comprenant au moins un élément isolant (25) situé radialement entre la bague interne (8) et l'arbre (3), de manière à isoler thermiquement la bague interne (8) de l'arbre (3), l'élément isolant (25) comprenant au moins un manchon intermédiaire (25) ayant une surface cylindrique externe (25a) en contact avec la bague interne (8) du palier à roulement (4) et un alésage interne (25b) en contact avec la surface cylindrique externe (3c) de l'arbre (3), **caractérisé en ce que** la surface cylindrique externe (25a) du manchon intermédiaire (25) est pourvue d'au moins une gorge axiale (25e) prévue pour coopérer avec au moins deux passages (8g) réalisés à travers l'épaisseur de la bague interne (8) du palier à roulement (4).

2. Turbocompresseur selon la revendication 1, dans lequel l'élément isolant (25) est fabriqué en un matériau ayant une conductivité thermique inférieure à 46 W.m⁻¹.K⁻¹.

3. Turbocompresseur selon la revendication 1 ou 2, dans lequel le manchon intermédiaire (25) présente une épaisseur supérieure à 0,3 mm.

4. Turbocompresseur selon l'une quelconque des revendications précédentes, dans lequel la surface cylindrique externe (25a) du manchon intermédiaire (25) est pourvue d'au moins deux saillies percées (25g) s'étendant radialement vers la bague interne (8) et prévues pour coopérer avec lesdits passages (8g) de la bague interne (8).
